# EUROPÄISCHE PATENTSCHRIFT

(11) **EP 4 163 532 B1**
(45) Veröffentlichungstag und Bekanntmachung des Hinweises auf die Patenterteilung: **17.07.2024**
(21) Anmeldenummer: 22196837.3
(22) Anmeldetag: 21.09.2022
(51) Int. Cl.: F16L 47/03, B29C 65/34, B29C 65/58, B29C 65/00, F16L 25/00, F16L 37/02, F16L 47/02

(54) **DRUCKROHRMUFFENVERBINDUNG**
PRESSURE PIPE SLEEVE CONNECTION
RACCORD À MANCHON DE TUYAU SOUS PRESSION

(30) Priorität: 07.10.2021 DE 102021005029
(43) Veröffentlichungstag der Anmeldung: 12.04.2023
(73) Patentinhaber: STAR Engineering Systems GmbH, 46485 Wesel (DE)
(72) Erfinder: Josten, Ulrich, 46562 Voerde (DE)
(74) Vertreter: Seyer & Nobbe Patentanwälte PartmbB

(56) Entgegenhaltungen:
- DE-A1- 102013 009 687
- DE-B4- 102013 009 689
- DE-U1- 20 213 972

## Beschreibung

Die Erfindung betrifft eine Druckrohrmuffenverbindung, insbesondere in Form einer rohrwandintegrierten Heizwendelmuffe, aufweisend zwei ineinander geschobene thermoplastische Kunststoffrohre, welche zumindest einenends eine Steckmuffe oder ein korrespondierendes Einsteckende aufweisen, wobei entweder die Steckmuffe oder das Einsteckende mit einer Heizwendel ausgestattet ist, welche zur Ausbildung einer Schweißzone vorgesehen ist.

Rohrmuffen werden zum Verbinden von Kunststoffrohren benötigt, weil die Länge einzelner Rohre begrenzt ist. Die Druckrohrmuffe kann beispielsweise aus einer überschiebbaren Muffenhülse bestehen. Alternativ besteht die Möglichkeit die thermoplastischen Kunststoffrohre einenends mit einer Steckmuffe und anderenends mit einem korrespondierenden Einsteckende auszustatten, sodass zwei Rohre jeweils zusammengeführt und ineinander einsteckbar sind. Die thermoplastischen Kunststoffrohre werden aufgrund ihrer Haltbarkeit und der Beständigkeit gegenüber vielen negativen Einflüssen der Umwelt verwendet und gelten als besonders widerstandfähig, insbesondere gegenüber zahlreichen aggressiven Stoffen. Ein weiterer Vorteil der Kunststoffrohre besteht durch ein geringes Gewicht und Flexibilität beim Transport und der Verlegung.

Die thermoplastischen Kunststoffrohre können hierbei wahlweise für Abwasserleitungen im Erdreich verlegt werden oder werden für Wasserversorgungsleitungen verwendet, wobei aufgrund eines höheren Wasserdruckes Druckrohrmuffen zum Einsatz kommen. Um eine dauerhafte Verbindung zwischen zwei Rohrenden der Kunststoffrohre herzustellen erfolgt vorzugsweise eine Verschweißung der thermoplastischen Kunststoffrohre. Hierbei bedient man sich häufig der Muffen, deren Wandung einen Heizdraht als Aufheizelement aufweist und als Überschiebemuffen über die Kunststoffrohre geschoben beziehungsweise als wandintegrierte Muffe ineinander gesteckt werden und mithilfe einer Spannungsbeaufschlagung des Heizdrahtes eine Erhitzung der thermoplastischen Kunststoffrohre bewirkt wird, sodass die Kunststoffrohre miteinander verschweißt werden können. Hierzu schmilzt zunächst das Wandungsmaterial der Druckrohrmuffe, welches mit dem Heizdraht ausgestattet ist und im Anschluss das thermoplastische Kunststoffmaterial des zweiten Rohrendes, sodass letztendlich eine flächige und dichte Schweißnaht zwischen beiden Kunststoffrohrenden erzielt wird.

Aus dem Gebrauchsmuster DE 20 2008 012 094 U1 und der WO 03/076840 A1 ist ein Übergangssattel mit einem umlaufenden Dichtungselement bekannt, welches zur Anlage auf der Umfangsfläche eines Kunststoffrohres vorgesehen ist und mit der Umfangsfläche verschweißt wird. Aus dem Gebrauchsmuster DE 296 17 559 U1 ist eine Steckverbindung für Kunststoffrohre bekannt, welche zusätzlich mit einer Dichtung versehen ist und eine Schweißzone aufweist.

Aus der DE 10 2013 009 689 B4 ist ein Transportschutz für Kunststoff-Rohrleitungen bekannt. Eine endseitige Muffenverbindung besteht hierbei aus einem Spitzende und einem Muffenende, wobei die Innenfläche des Muffenendes und die Außenfläche des Spitzendes einen Kontaktbereich bilden, welche jeweils mit einer aufgeschweißten Folie abgedeckt sind.

Aus der DE 10 2013 009 687 A1 ist eine Rohrverbindung für thermoplastische Kunststoffrohre bekannt, welche eine Steckmuffe oder ein Einsteckende aufweisen. Aus der DE 202 13 972 U1 ist ein Anschlussabschnitt eines Kunststoffrohres bekannt, bei dem zur thermisch-stoffschlüssigen Verbindung mit einer gegengleich ausgebildeten zweiten Umfangsfläche ein Widerstandsheizdraht verwendet wird.

Die bekannten Rohrmuffen führen teilweise dazu, dass der Durchmesser des Kunststoffrohres deutlich vergrößert wird, was nicht in allen Fällen erwünscht ist.

Zudem sind bei Überschiebemuffen immer zwei Verschweißungen auf den Oberflächen der beiden zu verbindenen Rohrenden notwendig. Die Montagezeit ist für so eine Muffenverbindung aufwendiger als bei den wandintegrierten Rohrverbindungen. Bisher erreichen zudem die bekannten wandintegrierten Schweißmuffen nicht die gewünschte Druckstufe bei vorliegendem Rohrquerschnitt und Wandstärke.

Ausgehend von diesem Stand der Technik liegt der vorliegenden Erfindung die Aufgabe zugrunde, eine Druckrohrmuffe aufzuzeigen, welche auch bei erhöhtem Innendruck eine ausreichende Dichtigkeit aufweist und der Druckstufe des Rohres entspricht.

Zur Lösung der Aufgabenstellung ist vorgesehen, dass die Druckrohrmuffenverbindung mindestens zwei Schweißzonen aufweist, wobei eine erste Schweißzone zwischen den beiden verbundenen Kunststoffrohrenden radial näher zur inneren Rohrwandfläche der Druckrohrmuffenverbindung und eine zweite Schweißzone radial näher zur äußeren Rohrwandfläche der Druckrohrmuffenverbindung angeordnet ist und zwischen den Schweißzonen ein Kontaktbereich der beiden Kunststoffrohrenden ausgebildet ist, welcher als Presspassung ausgelegt und/oder mit verrastenden Halteelementen oder einem Gewinde ausgestattet ist. Weitere vorteilhafte Ausgestaltungen der Erfindung ergeben sich aus den Unteransprüchen.

Durch die Ausbildung von zwei Schweißzonen und einer Kontaktfläche zwischen den Schweißzonen wird eine sichere Verbindung der beiden thermoplastischen Kunststoffrohre erreicht, welche als wandintegrierte Druckrohrmuffe auch größeren Druckbelastungen standhält. Hierbei ist eine erste Schweißzone radial bis zur inneren Rohrwandfläche ausgebildet und eine zweiten Schweißzone radial bis zur äußeren Rohrwandfläche. Zwischen den beiden Schweißzonen befindet sich eine Kontaktfläche, die während des Verschweißens nicht erwärmt und damit auch nicht plastifiziert wird. Diese Kontaktfläche kann beispielsweise als Presspassung ausgebildet sein oder mit verrastenden Halteelementen versehen sein, welche während des Verschweißens ein Auseinanderrücken der beiden Kunststoffrohrenden verhindern. Die erfindungsgemäßen Druckrohrmuffen zeichnen sich hierbei dadurch aus, dass die Verbindung der beiden Kunststoffrohrenden einerseits durch ein Kraft-/oder Formschluss und andererseits durch mindestens zwei Verschweißungen hergestellt wird.

Eine erhöhte Druckfestigkeit wird durch die Presspassung und erhöhte Wanddicke gewährleistet. In Längsrichtung wird eine mindestens 80%ige bis zu 100%ige Verbindung erreicht, da sich die Schweißzonen einerseits bis zur Rohrwandinnenfläche und andererseits bis zur Rohrwandaußenfläche erstrecken und die Kontaktfläche aus einer Presspassung besteht und/oder mit Verrastungen oder einem Gewinde ausgestattet ist.

Der besondere Vorteil besteht darin, dass eine Erwärmung nur in Teilbereichen der Kunststoffrohre im Bereich der Schweißzonen erfolgt, während demgegenüber zwischen den Schweißzonen keine Plastifizierung und Erwärmung und damit auch keine Verformung der Kunststoffrohre erfolgt.

Die besondere Ausgestaltung der Erfindung besteht darin, dass die innere Schweißzone unter Berücksichtigung eines zum Schweißen vorgesehenen Stützkörpers bis zur inneren Rohrwandfläche verläuft und unter Verwendung eines äußeren Spannringes die Schweißzone bis zur äußeren Rohrwandfläche verläuft, wodurch dann eine Verschweißung in Längsrichtung bis zu 100% der Wanddicke möglich ist. Beide Maßnahmen einerseits ein Stützkörper oder ein Spannring werden zur Vermeidung einer Verformung der Schweißzonen im Randbereich verwendet, sodass über die gesamte Länge der Rohrverbindung keine Querschnittsverringerung eintritt und eine Verschweißung exakt bis zur Rohrinnenfläche beziehungsweise Rohraußenfläche erfolgen kann.

In Ausgestaltung der Erfindung ist vorgesehen, dass die beiden Kunststoffrohrenden in Längsrichtung im übereinanderliegenden Flächenbereich bis zu 80 % miteinander verschweißbar sind. Durch einen großzügig ausgebildeten übereinanderliegenden Flächenbereich der bis zu 80 % und in Einzelfällen bis zu annähernd 100 % miteinander verschweißt ist, wird eine besonders hohe Haltbarkeit der Druckrohrmuffe gewährleistet. Der verschweißte Flächenbereich der beiden Kunststoffrohrenden gewährleistet zudem eine langlebige Verbindungssicherheit.

In besonderer Ausgestaltung der Erfindung ist vorgesehen, dass der zwischen den Schweißzonen ausgebildete Kontaktbereich der beiden Kunststoffrohrenden einen Klickverschluss durch zumindest eine Raststufe aufweist. Mithilfe eines Klickverschlusses wird sichergestellt, dass während des Schweißvorganges die beiden Kunststoffrohrenden nicht auseinandergleiten. Alternativ besteht die Möglichkeit, dass zumindest auf einer Seite des Kontaktbereiches wenigstens ein an das Kunststoffrohr einstückig ausgebildetes Verriegelungselement beabstandet zur Schweißzone angeformt ist, wobei das Verriegelungselement an der Innenfläche der Steckmuffe oder der Außenfläche des Einsteckendes angeformt sein kann. Vorzugsweise wird ein solches Verriegelungselement jeweils beabstandet zu beiden Schweißzonen ausgebildet, um einen höheren Zusammenhalt zu erzielen.

Hierbei besteht die Möglichkeit, dass das Verriegelungselement aus einem ringförmigen Wulst des Einsteckendes oder der Steckmuffe besteht und dieser ringförmige Wulst in eine korrespondierende Nut des Einsteckendes oder der Steckmuffe einrastet, sodass mit dem Zusammenstecken der beiden Kunststoffrohrende bereits eine ausreichende Fügekraft vorhanden ist, um anschließend den Schweißvorgang auszuführen. Auch können die Rohre durch ein Gewinde oder ein konisches Gewinde ineinander gedreht werden, um somit eine Presspassung an den Fügeflächen der Schweißzone herbeizuführen.

In Weiterer Ausgestaltung der Erfindung ist vorgesehen, dass die Schweißzone einen konischen oder gewölbten Verlauf aufweist. Ein konischer Verlauf der Schweißzone entspricht der Ausgestaltung eines konischen Einsteckendes. Alternativ kann ein gewölbter Verlauf zugrunde gelegt werden.

In Weiterer besonderer Ausgestaltung der Erfindung ist vorgesehen, dass der Winkel der Schweißzonen gegenüber der Längsrichtung der Druckrohrmuffe in Abhängigkeit der Wanddicke zwischen 10 bis 90 Grad, vorzugsweise zwischen 30 und 90 Grad und besonders bevorzugt zwischen 45 und 90 Grad liegt. Durch die Gestaltung der Druckrohrmuffe mit einer ersten und zweiten Schweißzone sowie einer Kontaktfläche besteht als weitere Alternative die Möglichkeit, dass die Schweißzonen unter einem Winkel zwischen 10 bis 90 Grad zur Längsrichtung der Druckrohrmuffe verlaufen, vorzugsweise zwischen 30 und 90 Grad und besonders bevorzugt zwischen 45 und 90 Grad. Es besteht somit die Möglichkeit sehr flache Winkel für die Schweißzone in Längsrichtung auszuwählen, aber ebenso auch beispielsweise einen Winkel von nahezu 90 Grad, welcher einer Stumpfschweißung entspricht. Auch in diesem Fall besteht die Möglichkeit, dass zwischen den beiden Schweißzonen eine Kontaktfläche ausgebildet ist, die als Presspassung oder mit verrastenden Halteelementen ausgestattet ist, wobei vorzugsweise ein Winkel deutlich unter 90 Grad in diesem Fall für die Kontaktfläche gewählt wird.

Um eine Presspassung zu erzielen ist in weiterer Ausgestaltung vorgesehen, dass die Innenabmessung der Steckmuffe gegenüber der Außenabmessung des Einsteckendes kleiner beziehungsweise die Außenabmessung des Einsteckendes gegenüber der Innenabmessung der Steckmuffe größer zur Erzielung einer Presspassung ausgebildet ist. Durch das Übermaß entweder des Einsteckendes oder des verkleinerte Innenmaßes der Steckmuffe ist es erforderlich, dass die beiden Kunststoffrohrenden ineinander gepresst werden, um die erforderliche Presspassung zu erzielen. Hierdurch wird unter anderem erreicht, dass die Wanddicke im Bereich der Druckrohrmuffe ansteigt und nach dem Fügen der Kunststoffrohrenden die Muffenverbindung durch die Presspassung dickwandiger als die Wanddicke der Kunststoffrohre ist. Fertigungbedingt haben Kunststoffrohre innere Spannungen die beim Bearbeiten des Materials, z.B durch Ausgestaltung einer Muffe oder eines Spitzendes, zu Maßänderungen führen. Dabei ist es erfahrungsgemäß so, dass sich bei Fertigung einer geringen Presspassung nach einiger Zeit eine Spielpassung ergibt. Deshalb werden die Fertigungsmaße der Muffe und des Spitzendes so gewählt, dass auch nach längerer Lagerung immer eine Presspassung entsteht. Wenn im Rohrinneren durch die Presspassung kein Versatz entstehen soll, kann das Spitzende konisch bearbeitet werden. Durch die Presspassung wird der gewünschte Innendurchmesser wieder erreicht. Von Vorteil ist, dass die Wanddicke im Bereich der Druckrohrmuffe durch die Presspassung dickwandiger ausgebildet ist als die der Kunststoffrohre. Eine Reduzierung der Wanddicke erfolgt durch die erfindungsgemäße Druckmuffe somit nicht, sodass nicht nur eine feste dauerhafte Verbindung zwischen den beiden Kunststoffrohrenden gewährleistet werden kann, sondern auch die entsprechende Druckfestigkeit der Rohre über einen langen Zeitraum.

Vorzugsweise weist die Steckmuffe und das Einsteckende einen konischen Verlauf auf, welcher mit den beiden Schweißzonen ausgestattet ist und einer zwischen den zwei Zonen angeordneten Kontaktfläche für eine Presspassung oder alternativ mit verrastenden Halteelementen, die im Bereich der Kontaktfläche angeordnet sind. Durch die konische Ausgestaltung der Steckmuffe und des Einsteckendes wird zusätzlich der Hohlraum in der Schweißzone minimiert, sodass sich ein schneller Schweißdruck innerhalb der Steckmuffe aufbauen kann. Darüber hinaus haben konische Muffen den Vorteil, dass diese im verschweißten Zustand höheren Längskräften standhalten können, weil die Wanddicken in Längsrichtung größer sind als bei wandintegrierten Muffen mit halbierter Wandstärke.

In Weiterer Ausgestaltung der Erfindung ist vorgesehen, dass ein Aufheizelement aus der Heizwendel besteht, welcher mit Strom beaufschlagbar ist. Hierbei besteht die Möglichkeit, dass die Heizwendel an der Außenfläche des Einsteckendes oder an der Innenfläche der Steckmuffe angeordnet sind. Die Enden der Heizwendel werden an der Stirnfläche durch Öffnungen oder Durchbrüche nach außen oder innen geführt, sodass eine Kontaktierung mit einer Spannungsquelle möglich ist und danach eine Spannungsbeaufschlagung erfolgt. Die Heizwendel dienen hierbei ausschließlich zur Verschweißung der beiden Kunststoffrohrenden, und zwar können die Heizwendel entweder in der konischen Außenfläche des Einsteckendes oder der konischen Innenfläche der Steckmuffe eingebracht werden. Durch die Erwärmung der Heizwendel bei einer Spannungsbeaufschlagung wird im Bereich der Schweißzone das thermoplastische Material der Kunststoffrohre aufgeheizt, sodass eine Verschmelzung beider Kunststoffrohrenden in den Schweißzonen einzeln oder gleichzeitig erfolgt. Diese Maßnahmen führt zu einer langen Lebensdauer derartiger Kunststoffrohre, was im vorliegenden Fall von besonderer Bedeutung ist, da diese im Erdreich verlegt werden und für mehrere Jahrzehnte Haltbarkeit bestimmt sind.

Die thermoplastischen Kunststoffrohre können hierbei einenends eine Steckmuffe und anderenends ein Einsteckende aufweisen. Es besteht aber ebenso die Möglichkeit, dass ein Kunststoffrohr zu beiden Enden mit einer Steckmuffe oder einem Einsteckende ausgestaltet ist, um nachträgliche Rohrverbindungen bei Umbaumaßnahmen oder notwendigen Änderungen vornehmen zu können. In diesem Fall kann mit kurzen Kunststoffrohren ein Übergang, beispielsweise zweier konischer Steckmuffen oder zweier konischer Einsteckenden geschaffen werden.

In Weiterer Ausgestaltung der Erfindung ist vorgesehen, dass die Schweißzonen und/oder der Bereich zwischen den Schweißzonen mit einer entfernbaren Folie abgedeckt ist, sodass zum Verschweißen ein aufwendiges Reinigen der Kunststoffrohrenden oder ein zusätzlicher Schälvorgang entfallen kann, um die Reinheit zu gewährleisten. Mit einer entsprechenden Folie kann hierbei der Kontaktbereich luftdicht und UV-beständig abgedeckt werden, sodass sich auf dem Kontaktbereich keine Verunreinigungen ablagern können und das Wandungsmaterial in diesen Oberflächenbereichen nicht oxidiert. Wahlweise kann die Folie entweder auf die Innenfläche der Steckmuffe und/oder das Einsteckende der jeweiligen Kunststoffrohrenden angeordnet werden.

Hierzu ist im Weiteren vorgesehen, dass die Folie aus einem Kunststoff oder einem Metall-Kunststoff-Verbund besteht. Eine Folie aus einem Kunststoffmaterial kann direkt auf eine Rohrleitung aus einem Kunststoff wie Polyethylen, Polypropylen oder Polyamid aufgeschweißt werden. Hierbei weisen die Kunststofffolien den großen Vorteil auf, dass die thermische Energie, die zu ihrer Aufschmelzung erforderlich ist, vergleichsweise gering ist, sodass eine Verschweißung der Folien einer Rohrleitung schnell mit geringem Energieverbrauch mit einfachen Gerätschaften, wie zum Beispiel einem Heizdraht erfolgen kann. Alternativ besteht die Möglichkeit eine Verschweißung mittels eines Lasers vorzunehmen, wobei dieser durch beispielsweise eine erste Kunststoffschicht, welche lasertransparent ausgeführt ist hindurchdringt und die dahinter befindliche Schicht mit dem Kunststoffrohr verschweißen kann. Hierzu ist nur ein geringer Wärmeeintrag erforderlich und somit ein nur leichtes Anschmelzen der Kunststoffschicht. Die verwendete Folie kann so gestaltet sein, dass sie aus mehreren Schichten vorzugsweise aus zwei Schichten besteht, wobei eine Beschichtung einen geringeren Schmelzpunkt aufweist und diese Beschichtung der Schweißzone der Rohrleitung zugewandt ist. Hierzu ist die Folie beispielsweise über die gesamte Fläche mehrschichtig ausgebildet, wobei die der Schweißzone zugewandte Schicht einen Schmelzpunkt aufweist, der geringer ist als der Schmelzpunkt der übrigen Schichten. Derartige Folien können einfach großformatig hergestellt werden und müssen bei Verwendung lediglich zugeschnitten werden. Die Folie selbst kann aus Polyethylen, Polypropylen oder Polyamid bestehen, sodass diese unmittelbar mit dem Kunststoffrohr verschweißt werden kann. Alternativ kommt ein Metall-Kunststoff-Verbund infrage, wobei in diesem Fall die Kunststofffolie wiederum mit dem Kunststoffrohr verschweißt wird und die Metallschicht somit auf der Außenseite angeordnet ist.

Die Besonderheit der vorliegenden Erfindung besteht darin, dass eine wandintegrierte Druckrohrmuffenverbindung aufgezeigt wird, welche für höhere Druckbelastungen ausgelegt ist. Zu diesem Zweck ist vorgesehen, dass zumindest zwei Schweißzonen zwischen den zu verbindenden Kunststoffrohrenden ausgebildet sind, wobei eine radial näher zur inneren Rohrwandfläche und eine zweite Schweißzone radial näher zur äußeren Rohrwandfläche angeordnet ist. Zwischen den Schweißzonen ist eine Kontaktfläche ausgebildet, welche als Presspassung oder mit verrastenden Halteelementen ausgestaltet sein kann. Der Wesentliche Vorteil dieser Druckrohrmuffe besteht darin, dass keine Verringerung der Wanddicke eintritt und es sich um eine wandintegrierte Muffe handelt, die auch keine Veränderung des Außendurchmessers erforderlich macht. Durch eine Presspassung oder verrastende Halteelemente kann zudem der nötige Schweißdruck der beiden Kunststoffrohrenden sichergestellt werden. Hierbei besteht im weiteren die Möglichkeit, dass ein Übermaß entweder des Einsteckendes oder ein verringertes Maß der Rohrmuffe vorliegt, um die beiden Kunststoffrohrenden mit entsprechender Kraft zusammen zu fügen, wodurch insbesondere bei der Presspassung eine höhere Wanddicke erzielt wird. Durch die wandintegrierte Druckrohrmuffenverbindung wird somit eine sehr gute Verbindung zweier Kunststoffrohrenden erreicht, die eine lange Lebensdauer gewährleistet, insbesondere da die Kunststoffrohre für die Verlegung im Erdreich vorgesehen sind. Eine solche rohrintegrierte Muffe ist auf Baustellen schneller zu Verlegen als herkömmliche Überschiebemuffen. Zudem ist diese Verbindung Ressourcen schonend da kein Muffenkörper benötigt wird und weniger Heizwendeldraht, der vorzugsweise aus Kupfer oder Kupferlegierungen besteht, benötigt wird.

Die Erfindung wird im Weiteren anhand der Figuren näher erläutert.

Es zeigt
- Fig. 1: eine Schnittdarstellung der unverformten Rohrenden mit Darstellung des überlappenden Bereich der Rohrverbindung und
- Fig. 2: eine Schnittdarstellung der gesteckten und durch die Presspassung verformten Rohrenden mit eingerastetem Klickverschluss.

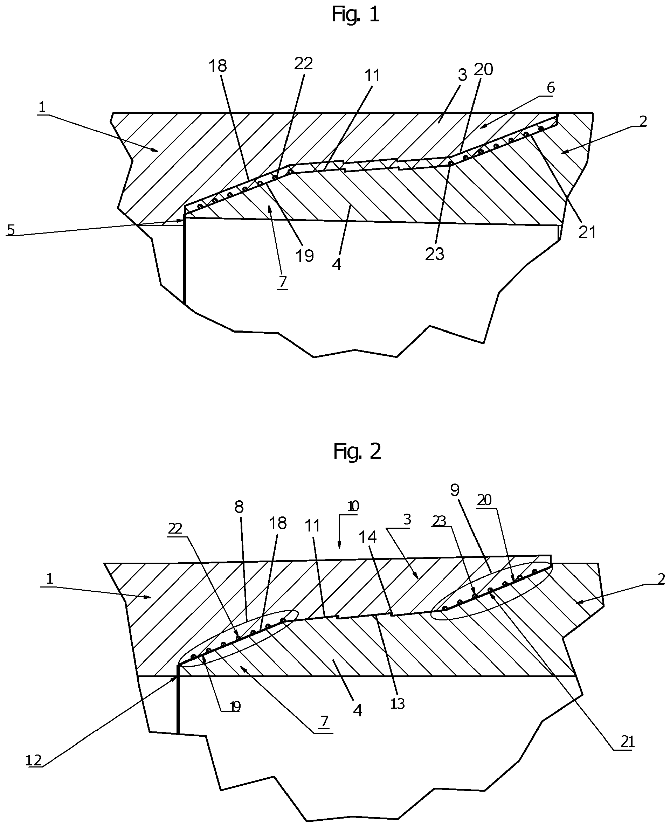

Figur 1 zeigt zwei Kunststoffrohre 1, 2, die unverformt ineinander liegen, um den Bereich der Presspassung 11 und den inneren Versatz 5 darzustellen. Das Einsteckende 7 ist innen konisch bearbeitet, wodurch nach dem Fügen sich das Einsteckende 7 dem Innendurchmesser anpasst und ein versatzfreier Übergang entsteht.

Presspassung 11 bedeutet in diesem Fall, dass entweder die Steckmuffe 6 hinsichtlich ihrer Abmessungen gegenüber dem Einsteckende 7 in ihrem Durchmesser kleiner ausgebildet ist oder alternativ das Einsteckende 7 eine Übergröße durch einen größeren Durchmesser aufweist, sodass nur mit Druck die beiden Kunststoffrohre 1, 2 ineinander geschoben werden können.

Figur 2 zeigt die beiden Kunststoffrohre 1, 2, wobei die Rohrenden 3, 4 nach dem Fügen durch die Presspassung 11 verformt wurden. Das Einsteckende 7 hat sich durch die Verformung an den Innendurchmesser des Rohres 1 angepasst, wodurch ein versatzfreier Übergang 12 der beiden Kunststoffrohre 1, 2 entsteht.

Die Kunststoffrohrenden 3, 4 sind über eine erste Schweißzone 8 und eine zweite Schweißzone 9 miteinander verbunden, während der mittlere Kontaktbereich 13 als Presspassung 11 mit Rastelementen 14 ausgebildet ist. Das Kunststoffrohr 1 mit seinem Kunststoffrohrende 3 ist als Steckmuffe 6 ausgebildet und besitzt zwei konisch zulaufende Anlageflächen 18, 20. Der Winkel dieser Anlageflächen 18, 20 kann hierbei einen Wert von 10 bis 90 Grad gegenüber der Längsachse der Kunststoffrohe 1 oder 2 einnehmen. Ein Winkel von 90 Grad kommt einer Stumpfverschweißung sehr nahe. Das zweite Kunststoffrohr 2 ist mit einem Einsteckende 7 versehen, welches in die Steckmuffe 6 geschoben werden kann. Aus diesem Grunde handelt es sich um eine wandintegrierte Rohrmuffe, in diesem Fall um eine Druckrohrmuffenverbindung 10.

Ebenso wie bei dem ersten Kunststoffrohr 1 besitzt das Einsteckende 7 zwei konisch zulaufende Anlageflächen 19, 21, welche die spätere Schweißzone 8, 9 bilden. Zwischen den Schweißzonen 8, 9 ist wiederum eine Kontaktbereich 13 ausgebildet, welcher im gezeigten Ausführungsbeispiel als Klickverschluss ausgeführt ist. Der Klickverschluss wird in diesem Fall dadurch erzielt, dass sägezahnförmige Rastelemente 14 vorhanden sind, wodurch beim Zusammenschieben der beiden Kunststoffrohre 1, 2 die Steckmuffe 6 mit dem Einsteckende 7 verrasten kann. Der besondere Vorteil dieser Ausführungsvariante besteht darin, dass nach erfolgter Verrastung der beiden Kunststoffrohre 1, 2 im Anschluss eine Verschweißung in den beiden Schweißzonen 15, 16 erfolgen kann, ohne dass ein zusätzlicher Fügedruck auf die Kunststoffrohrenden 3, 4 der Kunststoffohre 1, 2 ausgeübt werden muss.

Anstelle einer sägezahnförmigen Struktur im Kontaktbereich 13 der beiden Kunststoffrohre 1, 2 könnte auch eine Nutfederverbindung oder vergleichbare Klemmverbindungen eingesetzt werden. Es könnte ebenso ein konisches Gewinde verwendet werden, sodass die Kunststoffrohre ineinander eingedreht werden können.

Die Schweißzonen 8, 9 sind mit einer Heizwendel 22, 23 ausgestattet, welche mit Spannung beaufschlagt werden können, sodass eine Plastifizierung des Kunststoffmaterials der beiden Kunststoffrohre 1, 2 im Bereich der Schweißzonen 8, 9 eintritt. Durch diese Verschweißung verschmelzen die Kunststoffrohe 1, 2 miteinander, sodass eine druckfeste und langlebige Verbindung entsteht, um die Kunststoffrohre 1, 2 auch als Druckleitung einsetzen zu können.

Soweit die beiden Kunststoffrohe 1, 2 zusammengeschoben und mithilfe des Klickverschlusses zunächst verbunden sind, erfolgt eine Verschweißung der beiden Schweißzonen 8, 9 durch die beiden Heizwendeln 22, 23, welche mit Spannung beaufschlagt werden und zu einer Plastifierung der Schweißzonen 8, 9 führen, sodass eine feste Verbindung zwischen den Kunststoffrohren 1, 2 hergestellt wird.

### Bezugszeichenliste

- 1: Kunststoffrohr
- 2: Kunststoffrohr
- 3: Kunststoffrohrende
- 4: Kunststoffrohrende
- 5: Versatz
- 6: Steckmuffe
- 7: Einsteckende
- 8: Schweißzone
- 9: Schweißzone
- 10: Druckrohrmuffenverbindung
- 11: Presspassung
- 12: Übergang
- 13: Kontaktbereich
- 14: Rastelement
- 18: Anlagefläche
- 19: Anlagefläche
- 20: Anlagefläche
- 21: Anlagefläche
- 22: Heizwendel
- 23: Heizwendel

## Patentansprüche

1. Druckrohrmuffenverbindung (10), insbesondere in Form einer rohrwandintegrierten Heizwendelmuffe, aufweisend zwei ineinander geschobene thermoplastische Kunststoffrohre (1, 2), welche zumindest einenends eine Steckmuffe (6) oder ein korrespondierendes Einsteckende (7) aufweisen, wobei entweder die Steckmuffe (6) oder das Einsteckende (7) mit einer Heizwendel (22, 23) ausgestattet ist, welche zur Ausbildung einer Schweißzone (8, 9) vorgesehen ist,
**dadurch gekennzeichnet,**
**dass** die Druckrohrmuffenverbindung (10) mindestens zwei Schweißzonen (8, 9 ) aufweist, wobei eine erste Schweißzone (8) zwischen den beiden verbundenen Kunststoffrohrenden (3, 4) radial näher zur inneren Rohrwandfläche der Druckrohrmuffenverbindung (10) und eine zweite Schweißzone (9) radial näher zur äußeren Rohrwandfläche der Druckrohrmuffenverbindung (10) angeordnet ist und zwischen den Schweißzonen (8, 9) ein Kontaktbereich (13) der beiden Kunststoffrohrenden (3, 4) ausgebildet ist, welcher als Presspassung (11) ausgelegt und/oder mit verrastenden Halteelementen oder einem Gewinde ausgestattet ist.

2. Druckrohrmuffenverbindung (10) nach Anspruch 1,
**dadurch gekennzeichnet,**
**dass** die Verbindung der beiden Kunststoffrohrenden (3, 4) einerseits durch einen Kraft- und/oder Formschluss und andererseits durch die mindestens zwei Schweißzonen (8, 9) hergestellt ist.

3. Druckrohrmuffenverbindung (10) nach Anspruch 1 oder 2,
**dadurch gekennzeichnet,**
**dass** die beiden Kunststoffrohrenden (3, 4) in Längsrichtung im übereinanderliegenden Flächenbereich bis zu 80 % oder annähernd bis zu 100 % miteinander verschweißbar sind.

4. Druckrohrmuffenverbindung (10) nach Anspruch 1 , 2 oder 3,
**dadurch gekennzeichnet,**
**dass** die erste Schweißzone (8) unter Berücksichtigung eines zum Schweißen vorgesehenen Stützkörpers bis zur inneren Rohrwandfläche verläuft, und/oder dass unter Verwendung eines äußeren Spannringes die zweite Schweißzone (9) bis zur äußeren Rohrwandfläche verläuft.

5. Druckrohrmuffenverbindung (10) nach einem der Ansprüche 1 bis 4,
**dadurch gekennzeichnet,**
**dass** der zwischen den Schweißzonen (8, 9) ausgebildete Kontaktbereich (13) der beiden Kunststoffrohrenden (3, 4) einen Klickverschluss durch zumindest ein Rastelement (14) aufweist.

6. Druckrohrmuffenverbindung (10) nach einem der Ansprüche 1 bis 5,
**dadurch gekennzeichnet,**
**dass** zumindest auf einer Seite des Kontaktbereiches (13) wenigstens ein an das Kunststoffrohr (1, 2) einstückig ausgebildetes Verriegelungselement beabstandet zur Schweißzone (8, 9) angeformt ist, wobei das Verriegelungselement an der Innenfläche der Steckmuffe (6) oder der Außenfläche des Einsteckendes (7) angeformt ist.

7. Druckrohrmuffenverbindung (10) nach Anspruch 6,
**dadurch gekennzeichnet,**
**dass** das Verriegelungselement aus einem ringförmigen Wulst des Einsteckendes (7) oder der Steckmuffe (6) besteht, und/oder dass das Einsteckende (7) oder die Steckmuffe (6) mindestens eine korrespondierende Nut zur Aufnahme des Verriegelungselementes aufweist.

8. Druckrohrmuffenverbindung (10) nach einem der Ansprüche 1 bis 7,
**dadurch gekennzeichnet,**
**dass** ein Winkel der Schweißzonen (8, 9) gegenüber der Längsrichtung der Druckrohrmuffenverbindung (10) zwischen 10 bis 90 Grad, vorzugsweise zwischen 30 und 90 Grad und besonders bevorzugt zwischen 45 und 90 Grad liegt.

9. Druckrohrmuffenverbindung (10) nach einem der Ansprüche 1 bis 8,
**dadurch gekennzeichnet,**
**dass** die Innenabmessung der Steckmuffe (6) gegenüber der Außenabmessung des Einsteckendes (7) kleiner oder die Außenabmessung des Einsteckendes (7) gegenüber der Innenabmessung der Steckmuffe (6) größer zur Erzielung einer Presspassung (11) ausgebildet ist.

10. Druckrohrmuffenverbindung (10) nach einem der Ansprüche 1 bis 9,
**dadurch gekennzeichnet,**
**dass** die erste und zweite Schweißzone (8, 9) einen konischen oder gewölbten Verlauf aufweist.

11. Druckrohrmuffenverbindung (10) nach einem der Ansprüche 1 bis 10,
**dadurch gekennzeichnet,**
**dass** die Steckmuffe (6) und das Einsteckende (7) einen konischen Verlauf aufweisen, und/oder dass die Druckrohrmuffenverbindung (10) wandintegriert ausgebildet ist.

12. Druckrohrmuffenverbindung (10) nach einem oder mehreren der Ansprüche 1 bis 11,
**dadurch gekennzeichnet,**
**dass** ein Aufheizelement aus der Heizwendel (22, 23) besteht, welche mit Strom beaufschlagbar ist.

13. Druckrohrmuffenverbindung (10) nach Anspruch 12,
**dadurch gekennzeichnet,**
**dass** die Heizwendeln (22, 23) auf der Außenfläche des Einsteckendes (7) oder auf der Innenfläche der Steckmuffe (6) angeordnet sind.

14. Druckrohrmuffenverbindung (10) nach einem oder mehreren der Ansprüche 1 bis 13,
**dadurch gekennzeichnet,**
**dass** das Kunststoffrohr (1, 2) einenends eine Steckmuffe (6) und anderenends ein Einsteckende (7) aufweist, oder dass das Kunststoffrohr (1, 2) an beiden Enden eine Steckmuffe (6) oder ein Einsteckende (7) aufweist.

15. Druckrohrmuffenverbindung (10) nach einem oder mehreren der Ansprüche 1 bis 14,
**dadurch gekennzeichnet,**
**dass** die Schweißzonen (8, 9) und/oder eine Kontaktfläche (21) zwischen den Schweißzonen (8, 9) mit einer entfernbaren Folie abgedeckt ist, und/oder dass die Folie aus einem Kunststoff oder einem Metall-Kunststoff-Verbund besteht.

## Claims

1. Pressure pipe socket joint (10), in particular in the form of a pipe wall-integrated electrofusion socket, comprising two thermoplastic plastic pipes (1, 2) which are pushed into one another and which have at least at one end a push-in socket (6) or a corresponding push-in end (7), wherein either the push-in socket (6) or the push-in end (7) is equipped with a heating coil (22, 23) which is provided for forming a welding zone (8, 9),
**characterised in that**
the pressure pipe socket joint (10) has at least two welding zones (8, 9), wherein a first welding zone (8) is arranged between the two connected plastic pipe ends (3, 4) radially closer to the inner pipe wall surface of the pressure pipe socket joint (10) and a second welding zone (9) is arranged radially closer to the outer pipe wall surface of the pressure pipe socket joint (10), and a contact area (13) of the two plastic pipe ends (3, 4) is formed between the welding zones (8, 9), a contact area (13) of the two plastic pipe ends (3, 4) is formed, which is designed as a press fit (11) and/or is equipped with latching retaining elements or a thread.

2. Pressure pipe socket joint (10) according to claim 1,
**characterised in that**
the joint of the two plastic pipe ends (3, 4) is produced on the one hand by a force fit and/or form fit and on the other hand by the at least two welding zones (8, 9).

3. Pressure pipe socket joint (10) according to claim 1 or 2,
**characterised in that**
the two plastic pipe ends (3, 4) can be welded together in the longitudinal direction in the overlapping surface area by up to 80 % or approximately up to 100 %.

4. Pressure pipe socket joint (10) according to claim 1, 2 or 3,
**characterised in that**
the first welding zone (8) extends to the inner pipe wall surface, taking into account a support body provided for welding, and/or **in that** the second welding zone (9) extends to the outer pipe wall surface using an outer clamping ring.

5. Pressure pipe socket joint (10) according to one of claims 1 to 4,
**characterised in that**
the contact area (13) of the two plastic tube ends (3, 4) formed between the welding zones (8, 9) has a click lock by means of at least one latching element (14).

6. Pressure pipe socket joint (10) according to one of claims 1 to 5,
**characterised in that**
at least one locking element formed in one piece on the plastic pipe (1, 2) is moulded onto at least one side of the contact area (13) at a distance from the welding zone (8, 9), the locking element being moulded onto the inner surface of the plug-in socket (6) or the outer surface of the plug-in end (7).

7. Pressure pipe socket joint (10) according to claim 6,
**characterised in that**
the locking element consists of an annular bead of the plug-in end (7) or the plug-in socket (6), and/or **in that** the plug-in end (7) or the plug-in socket (6) has at least one corresponding groove for receiving the locking element.

8. Pressure pipe socket joint (10) according to one of claims 1 to 7,
**characterised in that**
an angle of the welding zones (8, 9) relative to the longitudinal direction of the pressure pipe socket joint (10) is between 10 and 90 degrees, preferably between 30 and 90 degrees and particularly preferably between 45 and 90 degrees.

9. Pressure pipe socket joint (10) according to one of claims 1 to 8,
**characterised in that**
the internal dimension of the push-in socket (6) is smaller than the external dimension of the push-in end (7) or the external dimension of the push-in end (7) is larger than the internal dimension of the push-in socket (6) in order to achieve an interference fit (11).

10. Pressure pipe socket joint (10) according to one of claims 1 to 9,
**characterised in that**
the first and second welding zones (8, 9) have a conical or curved shape.

11. Pressure pipe socket joint (10) according to one of claims 1 to 10,
**characterised in that**
the push-in socket (6) and the push-in end (7) have a conical shape, and/or **in that** the pressure pipe socket joint (10) is designed to be integrated into the wall.

12. Pressure pipe socket joint (10) according to one or more of claims 1 to 11,
**characterised in that**
a heating element consists of the heating coil (22, 23), to which current can be applied.

13. Pressure pipe socket joint (10) according to claim 12,
**characterised in that**
the heating coils (22, 23) are arranged on the outer surface of the plug-in end (7) or on the inner surface of the plug-in socket (6).

14. A pressure pipe socket joint (10) according to one or more of claims 1 to 13,
**characterised in that**
the plastic pipe (1, 2) has a plug-in socket (6) at one end and a plug-in end (7) at the other end, or that the plastic pipe (1, 2) has a plug-in socket (6) or a plug-in end (7) at both ends.

15. Pressure pipe socket joint (10) according to one or more of claims 1 to 14,
**characterised in that**
the welding zones (8, 9) and/or a contact surface (21) between the welding zones (8, 9) is covered with a removable film, and/or that the film consists of a plastic or a metal-plastic composite.

## Revendications

1. Assemblage de manchon de tube de pression (10), notamment sous forme d'un manchon à filament chauffant intégré dans la paroi du tube, comportant deux tubes en plastique (1, 2) emboîtés l'un dans l'autre, comportant, du côté d'une extrémité au moins, un embout mâle (6) ou un embout femelle correspondant (7), dans lequel ou l'embout mâle ou l'embout femelle (7) est équipé d'un filament chauffant (22, 23) prévu pour constituer une zone de soudage (8, 9),
**caractérisé en ce que**
l'assemblage de manchon de tube de pression (10) comporte au moins deux zones de soudage (8, 9), une première zone de soudage (8) étant agencée (8), entre les deux extrémités (3, 4) des tubes en plastique assemblés, radialement plus proche de la surface intérieure de la surface de paroi de l'assemblage de manchon de tube de pression (10), et une seconde zone de soudage (9) étant agencée (8) radialement plus proche de la surface extérieure de la surface de paroi du tube de l'assemblage de manchon de tube de pression (10), et **en ce que**, entre les deux zones de soudage (8, 9), une zone de contact (13) des deux extrémités du tube en plastique (3, 4) est ménagée, zone à ajustement serré (11) et/ou pourvue d'éléments d'arrêt à enclenchement ou d'un filetage.

2. Assemblage de manchon de tube de pression (10) selon la revendication 1, **caractérisé en ce que** les deux extrémités (3, 4) du tube en plastique sont reliées d'une part par une liaison de force et/ou par complémentarité de forme et d'autre part par les au moins deux zones de soudure (8, 9).

3. Assemblage de manchon de tube de pression (10) selon la revendication 1 ou 2, **caractérisé en ce que** les deux extrémités (3, 4) du tube en plastique sont susceptibles d'être longitudinalement reliées par soudage jusqu'à 80 % ou approximativement jusqu'à 100 % dans leurs zones de surface superposées.

4. Assemblage de manchon de tube de pression (10) selon la revendication 1, 2 ou 3, **caractérisé en ce que** la première zone de soudage (8) s'étend jusqu'à la surface intérieure du tube en tenant compte d'un corps d'appui destiné au soudage et/ou **en ce que** la seconde zone de soudage (9) s'étend jusqu'à la surface extérieure de la paroi du tube grâce à la mise en oeuvre d'une bague de serrage extérieure.

5. Assemblage de manchon de tube de pression (10) selon l'une des revendications 1 à 4, **caractérisé en ce que** la zone de contact (13) des deux extrémités (3, 4) des tubes en plastique ménagée entre les zones de soudage (8, 9) comporte une fermeture à clic grâce à au moins un élément d'encliquetage (14).

6. Assemblage de manchon de tube de pression (10) selon l'une des revendications 1 à 5, **caractérisé en ce qu'** au moins d'un côté de la zone de contact (13), au moins un élément de verrouillage en une pièce est moulé au tube en plastique (1, 2) avec espacement vis-à-vis de la zone de soudage (8, 9), l'élément de verrouillage étant moulé sur la face intérieure de l'embout mâle (6) ou sur la face extérieure de l'embout femelle (7).

7. Assemblage de manchon de tube de pression (10) selon la revendication 6, **caractérisé en ce que** l'élément de verrouillage est prévu sous forme d'un bourrelet annulaire de l'embout femelle (7) ou de l'embout mâle (6), et/ou **en ce que** soit l'embout femelle (7) soit l'embout mâle ( 6) présente au moins une gorge correspondante servant à accueillir l'élément de verrouillage.

8. Assemblage de manchon de tube de pression (10) selon l'une des revendications 1 à 7, **caractérisé en ce qu'**un angle des zones de soudage (8, 9) par rapport au sens longitudinal de l'assemblage de manchon de tube de pression (10) est compris entre 10 et 90 degrés, de préférence entre 30 et 90 degrés et de préférence encore entre 45 et 90 degrés.

9. Assemblage de manchon de tube de pression (10) selon l'une des revendications 1 à 8, **caractérisé en ce que** les dimensions intérieures de l'embout mâle (6) sont inférieures par rapport aux dimensions extérieures de l'embout femelle (7) ou **en ce que** les dimensions extérieures de l'embout femelle (7) sont supérieures par rapport aux dimensions intérieures de l'embout mâle (6), afin d'obtenir un ajustage serré (11).

10. Assemblage de manchon de tube de pression (10) selon l'une des revendications 1 à 9, **caractérisé en ce que** les première et seconde zones de soudage (8, 9) s'étendent sous forme conique ou cintrée.

11. Assemblage de manchon de tube de pression (10) selon l'une des revendications 1 à 10, **caractérisé en ce que** l'embout mâle (6) et l'embout femelle (7) s'étendent sous forme conique, et/ou **en ce que** l'assemblage de manchon de tube de pression (10) est intégré dans la paroi.

12. Assemblage de manchon de tube de pression (10) selon l'une ou plusieurs des revendications 1 à 11, **caractérisé en ce qu'**un élément de chauffage est constitué par le filament chauffant (22, 23) susceptible d'être alimenté en courant.

13. Assemblage de manchon de tube de pression (10) selon la revendication 12, **caractérisé en ce que** les filaments chauffants (22, 23) sont disposés soit sur la surface extérieure de l'embout femelle (7) soit sur la surface intérieure de l'embout mâle (6).

14. Assemblage de manchon de tube de pression (10) selon l'une ou plusieurs des revendications 1 à 13, **caractérisé en ce que** le tube en plastique (1, 2) comporte à l'une de ses extrémités un embout mâle (6) et à l'autre extrémité un embout femelle (7) ou **en ce que** le tube en plastique (1, 2) présente à ses deux extrémités soit un embout mâle (6) soit un embout femelle (7).

15. Assemblage de manchon de tube de pression (10) selon l'une ou plusieurs des revendications 1 à 14, **caractérisé en ce que** les zones de soudage (8, 9) et/ou une surface de contact (21) entre les zones de soudage (8, 9) sont recouvertes d'un film amovible et/ou **en ce que** le film et réalisé en une matière plastique ou en un composite métalloplastique.
